(19) Europäisches Patentamt
European Patent Office
Office européen des brevets

(11) **EP 4 512 573 A1**

(12) **EUROPEAN PATENT APPLICATION**
published in accordance with Art. 153(4) EPC

(43) Date of publication:
**26.02.2025 Bulletin 2025/09**

(21) Application number: **22839114.0**

(22) Date of filing: **26.10.2022**

(51) International Patent Classification (IPC):
***B23P 25/00*** (2006.01)   ***B23B 1/00*** (2006.01)

(52) Cooperative Patent Classification (CPC):
**B23B 1/00; B23P 25/00**

(86) International application number:
**PCT/JP2022/039914**

(87) International publication number:
**WO 2023/203792 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022 JP 2022068693**

(71) Applicants:
• **Avex, Inc.**
**Nagoya-shi, Aichi 4670853 (JP)**
• **Nagoya Institute Of Technology**
**Nagoya-shi, Aichi 466-0061 (JP)**

(72) Inventors:
• **FUTAMURA, Yuya**
**Nagoya-shi**
**Aichi**
**4670853 (JP)**

• **ITOIGAWA, Fumihiro**
**Nagoya-Shi, Aichi 4660061 (JP)**
• **KATOH, Takenori**
**Nagoya-shi**
**Aichi**
**4670853 (JP)**
• **SHIROYAMA, Shinya**
**Nagoya-shi**
**Aichi**
**4670853 (JP)**

(74) Representative: **Gille Hrabal**
**Partnerschaftsgesellschaft mbB**
**Patentanwälte**
**Brucknerstraße 20**
**40593 Düsseldorf (DE)**

(54) **CUTTING PROCESSING METHOD**

(57)   There is provided a cutting method in which a surface of a workpiece is cut to form a machined surface by relatively displacing a tool in which a cutting edge is formed by a flank face and a rake face, in a predetermined machining direction with respect to the workpiece while bringing the tool into contact with the surface of the workpiece, the method including: a groove forming procedure of forming a plurality of groove portions each extending along a direction intersecting the machining direction, at intervals in the machining direction in a region on a downstream side in the machining direction on the surface of the workpiece.

FIG. 1

**Description**

TECHNICAL FIELD

The present invention relates to a cutting method for forming a machined surface by cutting a surface of a workpiece.

BACKGROUND ART

When a workpiece is cut, upon bringing a tool into contact with the workpiece and displacing the tool, machining resistance associated with the displacement causes a defect such as wear or partial chipping of the tool. The defect becomes more pronounced in a hard-to-cut material that is difficult to cut.
For this reason, various techniques for reducing machining resistance during cutting have been proposed. For example, there is a technique in which a region on a workpiece with which a tool comes into contact is heated by precedently irradiating the region with a laser immediately before contact, thereby reducing strength of the region with which the tool comes into contact (refer to Patent Documents 1 and 2).

CITATION LIST

PATENT DOCUMENT

   Patent Document 1: JP H09-155602 A
   Patent Document 2: JP S61-152345 A

SUMMARY OF THE INVENTION

PROBLEM TO BE SOLVED BY THE INVENTION

However, since the technique reduces strength of the workpiece through heating with the laser, performing machining immediately after heating is required such that the region irradiated with the laser comes into contact with the tool in a state where the region is sufficiently heated, and the degree of freedom as a machining method is not necessarily high, which is a problem.
The invention is conceived to solve such problems, and an object of the invention is to provide a technique for reducing machining resistance while increasing the degree of freedom as a machining method.

MEANS FOR SOLVING PROBLEM

According to a first aspect to solve the foregoing problems, there is provided a cutting method in which a surface of a workpiece is cut to form a machined surface by relatively displacing a tool in which a cutting edge is formed by a flank face and a rake face, in a predetermined machining direction with respect to the workpiece while bringing the tool into contact with the surface of the workpiece, the method including: a groove forming procedure of forming a plurality of groove portions each extending along a direction intersecting the machining direction, at intervals in the machining direction in a region on a downstream side in the machining direction on the surface of the workpiece. In addition, this aspect may be implemented as in a second aspect shown below. In the second aspect, in the groove forming procedure, when a "sheared surface" that reaches a tip of the cutting edge from a surface of a cutting target layer in a cross-sectional view intersecting a direction in which the cutting edge extends is assumed as a boundary between the cutting target layer to be cut by the cutting edge in contact with the workpiece and a chip cut by the cutting edge in that state, the groove portions are formed at intervals wider than a length L of the "sheared surface".
According to the cutting method of this aspect, the plurality of groove portions each extending along the direction intersecting the machining direction are formed at intervals in the region on the downstream side in the machining direction of the tool on the surface of the workpiece.
In the process of forming the machined surface by cutting the workpiece, the "sheared surface" that reaches the tip of the cutting edge from the surface of the cutting target layer in a cross-sectional view intersecting the direction in which the cutting edge of the tool extends is formed as the boundary between the cutting target layer to be cut by the cutting edge in contact with the workpiece and the chip cut therefrom.
The "sheared surface" is inclined to the downstream side in the machining direction with the tip of the cutting edge as a starting point, but the machining resistance when the chip is cut from the cutting target layer changes according to the length of the "sheared surface". In this regard, as in this aspect, when the groove portions are formed on the downstream side in the machining direction, as the cutting edge approaches the groove portion, the inclination and formation of the sheared surface are interrupted by the groove portion, and the sheared surface is shortened, so that the machining resistance particularly in the vicinity of the groove portion can be reduced.

However, when the number of the groove portions is increased, and the interval therebetween becomes too narrow, a region between the groove portions is pushed by the cutting edge to collapse to the downstream side. Therefore, the displacement of the cutting edge is interrupted, thereby rather causing an increase in machining resistance, which is a concern.

The applicants of the present application have come up with creative ideas in view of such a relationship between the interval between the groove portions and the machining resistance, and as a result, have found the interval between the groove portions as described in this aspect, as an interval between the groove portions suitable for reducing the machining resistance. For this reason, according to the cutting method of this aspect, the machining resistance can be effectively reduced.

Here, since a reduction in machining resistance is brought about by the structural feature such as the groove portions formed at predetermined intervals, unlike the case where a reduction in machining resistance is brought about by a feature where situations easily change over time, such as a reduction in strength by heating, performing machining immediately after the formation of the groove portions is not necessarily required, and in this regard, the degree of freedom as a machining method is high. Therefore, in the cutting method of this aspect, it is possible to reduce the machining resistance while increasing the degree of freedom as a machining method.

BRIEF DESCRIPTION OF DRAWINGS

Fig. 1 is a side cross-sectional view of main parts showing a process of a cutting method according to the present disclosure;
Fig. 2 is a flowchart showing a procedure of the cutting method according to the present disclosure; and
Fig. 3 is an enlarged side cross-sectional view of the main parts showing the process of the cutting method according to the present disclosure.

MODE(S) FOR CARRYING OUT THE INVENTION

Hereinafter, a cutting method for forming a machined surface by cutting a surface of a workpiece.

(1) Procedure of cutting method

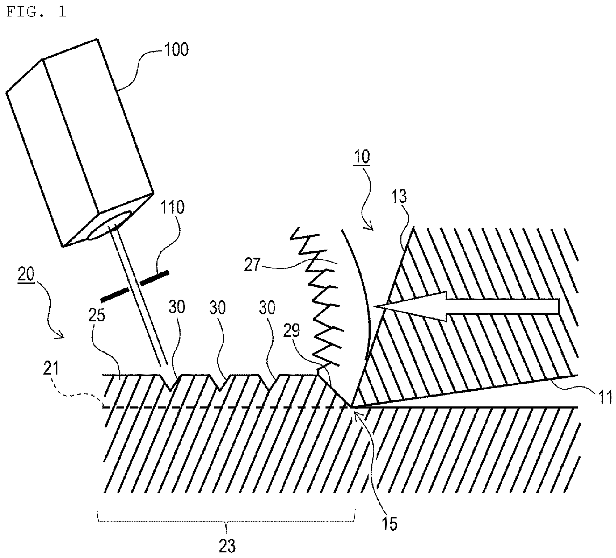

In the cutting method of the present embodiment, as shown in Fig. 1, a surface of a workpiece 20 is cut to form a machined surface 21 by relatively displacing a tool 10 in which a cutting edge 15 is formed by a flank face 11 and a rake face 13, in a predetermined machining direction (refer to an arrow in the same drawing) with respect to the workpiece 20 while bringing the tool 10 into contact with the surface of the workpiece 20. Incidentally, the tool 10 is a tool having a rake angle of 0 to 20°.

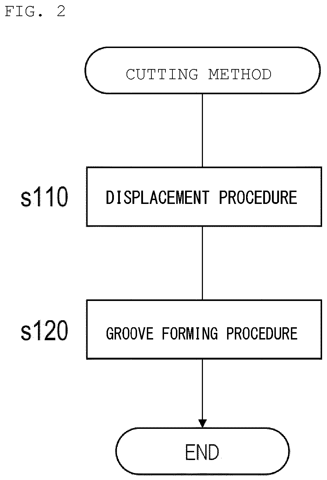

In the cutting method, as shown in Fig. 2, first, a displacement procedure is performed (s110). Here, the tool 10 is brought into contact with the surface of the workpiece 20, and then a relative displacement in the machining direction with respect to the workpiece 20 is started. In the present embodiment, the tool 10 is displaced until the tool 10 comes into contact with the surface of the workpiece 20, and then a workpiece 20 side is displaced with respect to the tool 10. According to the displacement, the surface of the workpiece 20 is cut to form the machined surface 21.

The workpiece 20 is configured to be displaceable in the machining direction with respect to the tool 10 by a displacement mechanism (not shown). In the present embodiment, the displacement speed is configured to be selectable from a range of 50 to 300 m/min.

Then, a groove forming procedure is performed (s120). Here, a plurality of groove portions 30 extending in a direction intersecting the machining direction (front-back direction of the drawing sheet of Fig. 1, and hereinafter, the same applies) are formed at intervals in the machining direction by repeatedly irradiating a region (region where the cutting edge 15 arrives) 23 on a downstream side in the machining direction on the surface of the workpiece 20 with a laser (more specifically, pulsed laser) through a slit 110 extending in the direction. Each of the groove portions 30 is formed as one groove extending over a certain length in the direction intersecting the machining direction.

Here, the groove portions 30 each having a depth of 20 to 40 $\mu$m and a width of 20 to 200 $\mu$m are formed. As a specific example, depending on the materials of the tool 10 and the workpiece 20, the surface of the workpiece 20 is vertically irradiated with a laser having a pulse width of 7 μs, an output of 2.0 to 3.0 W, a wavelength of 355 nm, and a frequency of 15 kHz.

Irradiation with a laser is performed by an irradiation unit 100. The irradiation unit 100 includes an oscillator that outputs a pulsed laser; a vibration adjuster that adjusts the order of a vibration frequency of the laser; an attenuator (ATT) that adjusts the output of the laser; a beam expander (EXP) that adjusts the diameter of the laser, and the like, is configured to output the laser set through the foregoing components, via an optical lens and via the above-described slit 110, and performs irradiation with the laser toward an optical axis in a predetermined direction.

The irradiation with the laser is performed at a period (for example, 0.04 to 2 ms) determined according to the displacement speed set in the displacement procedure and to the intervals at which the groove portions 30 are to be formed.

In addition, the groove portions 30 are formed at intervals P wider than a length L of a sheared surface 29 (> L). The sheared surface 29 is a surface that is formed as a boundary between a cutting target layer 25 to be cut by the cutting edge 15 in contact with the workpiece 20 and a chip 27 cut by the cutting edge 15 in that state, and that reaches a tip of the cutting edge 15 from a surface of the cutting target layer 25 in a cross-sectional view intersecting a direction in which the cutting edge 15 extends. As a specific example, the groove portions 30 are formed at intervals of 0.2 to 1.5 mm.

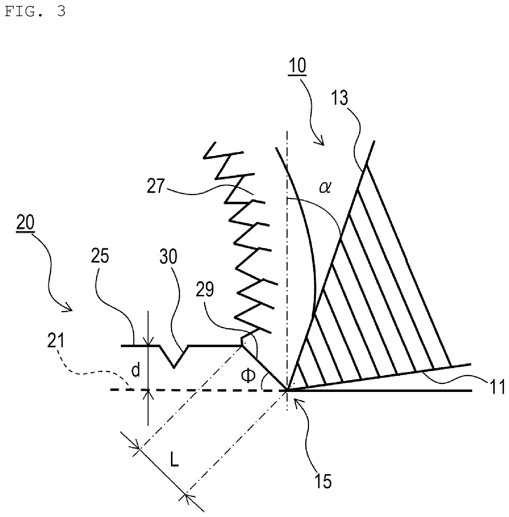

In addition, as shown in Fig. 3, the length L of the sheared surface 29 is defined by the following equation based on a thickness d of the cutting target layer 25, a shear angle $\phi$ formed between the machined surface 21 and the sheared surface 29, a rake angle $\alpha$ formed between the rake face 13 of the cutting edge 15 and a plane orthogonal to the machined surface 21, and a rake face average friction coefficient $\mu$ (= F/N) defined by a frictional force F and a vertical force N acting on the rake face 13. Here, the rake face average friction coefficient $\mu$ has a value of 0.25 or less that is defined based on machining conditions determined by friction coefficients (0.25 to 0.4) of the materials of the workpiece 20 and the tool 10, a cutting speed (relative displacement speed of the tool 10 with respect to the workpiece 20), the degree of surface smoothness of the tool 10, and the like. In the present embodiment, the machining conditions are adjusted based on a friction coefficient of 0.25 to 0.4 of iron as the workpiece 20 and of a cemented carbide as the material of the tool 10, such that the rake face average friction coefficient $\mu$ becomes 0.1 smaller than the friction coefficient.

[Equation 0001]

(2) Modification examples

The embodiment of the invention has been described above, but it goes without saying that the invention is not limited to the embodiment and can take various modes within the technical scope of the invention.

For example, in the embodiment, the example has been provided in which in the displacement procedure, the workpiece 20 side is displaced with respect to the tool 10. However, in the displacement procedure, a tool 10 side may be displaced with respect to the workpiece 20.

In addition, in the embodiment, the example has been provided in which the groove forming procedure is sequentially performed at the same timing as the displacement procedure. However, the groove forming procedure may be performed before the displacement procedure, and may not necessarily be performed at the same timing.

In addition, in the embodiment, the configuration has been provided as an example in which each of the groove portions 30 is formed as one groove extending in the direction intersecting the machining direction. However, each of the groove portions 30 may be formed by arranging a plurality of holes or grooves in a row over a certain length in the direction intersecting the machining direction. In this case, in the groove forming procedure, each of the groove portions 30 is formed by continuously or intermittently performing irradiation with a laser while displacing a laser irradiation region along the direction intersecting the machining direction.

In addition, in the embodiment, the example has been provided in which the tool 10 is a tool having a single rake angle, but as the tool 10, a tool having a double rake angle shape may be adopted.

In addition, in the embodiment, the configuration has been provided as an example in which in the groove forming procedure, the grooves extending in the direction intersecting the machining direction are formed by irradiating the surface of the workpiece 20 with a laser through the slit 110. However, instead of the slit 110, a lens that linearly extends a laser along the direction intersecting the machining direction may be used.

In addition, in the embodiment, the configuration has been provided as an example in which in the groove forming procedure, the grooves extending in the direction intersecting the machining direction are formed by irradiating the surface of the workpiece 20 with a laser through the slit 110. However, a configuration may be employed in which in the groove forming procedure, grooves extending in the direction intersecting the machining direction are formed by repeatedly scanning the surface of the workpiece 20 with a laser along the direction intersecting the machining direction (front-back direction of the drawing sheet of Fig. 1, and hereinafter, the same applies). In this case, the irradiation unit 100 may include a displacement mechanism that can displace the irradiation unit 100 in two directions each intersecting an optical axis of the laser.

(3) Actions and effects

According to the cutting method of the embodiment, the plurality of groove portions 30 each extending along the direction intersecting the machining direction are formed at intervals in the region 23 on the downstream side in the machining direction of the tool 10 on the surface of the workpiece 20.

In the process of forming the machined surface 21 by cutting the workpiece 20, the sheared surface 29 that reaches the tip of the cutting edge 15 from the surface of the cutting target layer 25 in a cross-sectional view intersecting the direction in which the cutting edge 15 of the tool 10 extends is formed as the boundary between the cutting target layer 25 to be cut by the cutting edge 15 in contact with the workpiece 20 and the chip cut therefrom.

The sheared surface 29 is inclined to the downstream side in the machining direction with the tip of the cutting edge 15 as a starting point, but the longer the sheared surface 29 is, the more the machining resistance when the chip 27 is cut from the cutting target layer 25 increases, which is a concern. In this regard, as in the embodiment, when the groove portions 30 are formed on the downstream side in the machining direction, as the cutting edge 15 approaches the groove portion 30, the inclination and formation of the sheared surface 29 are interrupted by the groove portion 30, and the sheared surface 29 is shortened, so that the machining resistance particularly in the vicinity of the groove portion 30 can be reduced.

However, when the number of the groove portions 30 is increased, and the interval therebetween becomes too narrow, a region between the groove portions 30 is pushed by the cutting edge 15 to collapse to the downstream side. Therefore, the displacement of the cutting edge 15 is interrupted, thereby rather causing an increase in machining resistance, which is a concern.

The applicants of the present application have come up with creative ideas in view of such a relationship between the interval between the groove portions 30 and the machining resistance, and as a result, have found the interval wider than the length L of the sheared surface 29 as described above, as an interval between the groove portions 30 suitable for reducing the machining resistance. For this reason, according to the cutting method, the machining resistance can be effectively reduced.

Here, since a reduction in machining resistance is brought about by the structural feature such as the groove portions 30 formed at predetermined intervals, unlike the case where a reduction in machining resistance is brought about by a feature where situations easily change over time, such as a reduction in strength by heating, performing machining immediately after the formation of the groove portions 30 is not necessarily required, and in this regard, the degree of freedom as a machining method is high. Therefore, in the cutting method, it is possible to reduce the machining resistance while increasing the degree of freedom as a machining method.

EXPLANATIONS OF LETTERS OR NUMERALS

| | |
|---|---|
| 10 | TOOL |
| 11 | FLANK FACE |
| 13 | RAKE FACE |
| 15 | CUTTING EDGE |
| 20 | WORKPIECE |
| 21 | MACHINED SURFACE |
| 23 | REGION |
| 25 | CUTTING TARGET LAYER |
| 29 | SHEARED SURFACE |
| 30 | GROOVE PORTION |
| 100 | IRRADIATION UNIT |
| 110 | SLIT |

**Claims**

1. A cutting method in which a surface of a workpiece is cut to form a machined surface by relatively displacing a tool in which a cutting edge is formed by a flank face and a rake face, in a predetermined machining direction with respect to the workpiece while bringing the tool into contact with the surface of the workpiece, the method comprising:
a groove forming procedure of forming a plurality of groove portions each extending along a direction intersecting the machining direction, at intervals in the machining direction in a region on a downstream side in the machining direction on the surface of the workpiece.

2. The cutting method,
   wherein in the groove forming procedure, when a "sheared surface" that reaches a tip of the cutting edge from a surface of a cutting target layer in a cross-sectional view intersecting a direction in which the cutting edge extends is assumed as a boundary between the cutting target layer to be cut by the cutting edge in contact with the workpiece and a chip cut by the cutting edge in that state, the groove portions are formed at intervals P wider than a length L of the "sheared surface" (> L).

3. The cutting method according to claim 2,

   wherein the length L of the sheared surface is defined by the following equation based on a thickness d of the cutting target layer, a shear angle $\phi$ formed between the machined surface and the sheared surface, a rake angle $\alpha$ formed between the rake face of the cutting edge and a plane orthogonal to the machined surface, and a rake face average friction coefficient $\mu$ having a value smaller than friction coefficients of materials of the workpiece and the tool, and
   the rake face average friction coefficient $\mu$ has a value of 0.25 or less that is defined based on the friction coefficient of the material of the tool and on a machining condition.

   [Equation 0001]

   $$P > L = \frac{d}{\sin \phi} = \frac{d}{\sin \left( \frac{\pi}{4} - \tan \mu^{-1} + \alpha \right)}$$

4. The cutting method according to claim 1,
   wherein in the groove forming procedure, each of the groove portions is formed by continuously or intermittently performing irradiation with a laser while displacing a laser irradiation region along the direction intersecting the machining direction.

5. The cutting method according to claim 4,
   wherein in the groove forming procedure, the groove portions are formed by irradiation with a pulsed laser.

FIG. 1

FIG. 2

```
        ╭─────────────────────────╮
        │     CUTTING METHOD      │
        ╰─────────────────────────╯
                     │
                     │
     ┌─────────────────────────────────┐
s110 │    DISPLACEMENT PROCEDURE       │
     └─────────────────────────────────┘
                     │
                     │
     ┌─────────────────────────────────┐
s120 │   GROOVE FORMING PROCEDURE      │
     └─────────────────────────────────┘
                     │
                     ▼
        ╭─────────────────────────╮
        │           END           │
        ╰─────────────────────────╯
```

FIG. 3

## INTERNATIONAL SEARCH REPORT

| International application No. |
|---|
| **PCT/JP2022/039914** |

**A. CLASSIFICATION OF SUBJECT MATTER**

**_B23P 25/00_**(2006.01)i; **_B23B 1/00_**(2006.01)i
FI: B23P25/00; B23B1/00 Z

According to International Patent Classification (IPC) or to both national classification and IPC

**B. FIELDS SEARCHED**

Minimum documentation searched (classification system followed by classification symbols)

B23P23/00-B23P25/00; B23B1/00; B23B25/00-B23B25/02; B23C1/00-B23C3/00; B23C7/00-B23C9/00; B23D1/00-B23D81/00;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-170615 A (CITIZEN WATCH CO., LTD.) 28 September 2017 (2017-09-28) paragraphs [0015], [0017], [0022], [0025], fig. 3-5 | 1-2, 4-5 |
| A | | 3 |
| X | JP 2021-65942 A (TAKAMATSU MACHINERY CO., LTD.) 30 April 2021 (2021-04-30) paragraph [0016] | 1 |
| A | | 3 |
| X | JP 6-328303 A (CANON INC.) 29 November 1994 (1994-11-29) paragraph [0036], fig. 7 | 1 |
| A | | 3 |
| X | JP 2005-22066 A (OSG CORP.) 27 January 2005 (2005-01-27) paragraphs [0034], [0044] | 1, 4 |
| A | | 3 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/039914**

### C. DOCUMENTS CONSIDERED TO BE RELEVANT

| Category* | Citation of document, with indication, where appropriate, of the relevant passages | Relevant to claim No. |
|---|---|---|
| X | JP 2002-263902 A (MATSUSHITA ELECTRIC IND. CO., LTD.) 17 September 2002 (2002-09-17)<br>    paragraph [0023] | 1 |
| A |  | 3 |

INTERNATIONAL SEARCH REPORT
Information on patent family members

International application No.

**PCT/JP2022/039914**

| Patent document cited in search report | | | Publication date (day/month/year) | Patent family member(s) | Publication date (day/month/year) |
|---|---|---|---|---|---|
| JP | 2017-170615 | A | 28 September 2017 | (Family: none) | |
| JP | 2021-65942 | A | 30 April 2021 | (Family: none) | |
| JP | 6-328303 | A | 29 November 1994 | US 5887498 A column 7, lines 26-36, fig. 7 CN 1095829 A | |
| JP | 2005-22066 | A | 27 January 2005 | US 2005/0053437 A1 paragraphs [0037], [0058] KR 10-2006-0037324 A | |
| JP | 2002-263902 | A | 17 September 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09155602 A
- JP S61152345 A